## Europäisches Patentamt
## European Patent Office
## Office européen des brevets

(19)

(11) Veröffentlichungsnummer: **0 149 217**
**B1**

(12)

# EUROPÄISCHE PATENTSCHRIFT

(45) Veröffentlichungstag der Patentschrift:
29.04.87

(51) Int. Cl.⁴: **G 01 P 3/488**, G 01 P 1/02

(21) Anmeldenummer: **84116135.9**

(22) Anmeldetag: **21.12.84**

(54) **Induktivgeber.**

(30) Priorität: **12.01.84 DE 3400870**

(43) Veröffentlichungstag der Anmeldung:
**24.07.85 Patentblatt 85/30**

(45) Bekanntmachung des Hinweises auf die Patenterteilung:
**29.04.87 Patentblatt 87/18**

(84) Benannte Vertragsstaaten:
**DE FR GB IT NL SE**

(56) Entgegenhaltungen:
**FR-A-1 138 008
FR-A-2 086 287
US-A-3 626 226
US-A-3 905 672
US-A-3 946 482**

(73) Patentinhaber: **VDO Adolf Schindling AG,
Gräfstrasse 103, D-6000 Frankfurt/Main (DE)**

(72) Erfinder: **Form, Roland, Dipl. -Ing., Heergasse 2,
D-6307 Linden (DE)**
Erfinder: **Welter, Horst, Dipl. -Ing., Jenaer
Strasse 12, D-6307 Linden (DE)**

(74) Vertreter: **Klein, Thomas, Dipl.- Ing. (FH), Sodener
Strasse 9 Postfach 6140, D-6231 Schwalbach a.
Ts. (DE)**

## Beschreibung

Die Erfindung betrifft einen Induktivgeber mit einem eine Öffnung aufweisenden Gehäuse, in der zwei Polschuhe, ein zwischen den Polschuhen angeordneter Dauermagnet und eine den Dauermagnet und die Polschuhe umschließende Spule angeordnet sind, wobei die Spule einen in die Öffnung des Gehäuses einsetzbaren Spulenträger umschließt, an dessen einem Ende hervorstehend zwei jeweils mit einem Ende der Spule verbundene Ausgangsanschlußstücke fest angeordnet sind, die mit einem nach außen führenden Kabel verbunden sind.

Aus der FR-A 20 86 287 ist ein derartiger Induktivgeber bekannt, dessen einzelne Bauteile in dem topfartigen Gehäuse angeordnet sind. Durch Ausnehmungen im Boden des Gehäuses ragen die beiden Polschuhe nach außen, während das Kabel durch eine Durchführung im Deckel des Gehäuses nach außen geführt ist.

Diese Ausbildung ist nicht nur aufwendig zusammenbaubar, sondern hat auch den Nachteil aufgrund der von außen in das Innere des Gehäuses führenden, für die Polschuhe vorgesehenen Ausnehmungen nicht wasserdicht zu sein. Somit führt dieser Induktivgeber bei Verwendung im Freien, wie z. B. als Raddrehzahlaufnehmer von Kraftfahrzeugen zu häufigen Defekten.

Aus der US-A- 36 26 226 ist es bekannt, den bei einem Induktivgeber verwendeten Spulenträger so auszubilden, daß er mit dem an seinem einen Ende anngebrachten Flansch die Öffnung des Gebergehäuses verschließt und daß er in seiner Ausnehmung den Dauermagnet und den mit seinem einen Ende aus der Ausnehmung herausragenden Polschuh aufnimmt.

Die FR-A- 11 38 008 offenbart einen Induktivgeber, dessen Gehäuse eine durchgehende Öffnung aufweist. Diese Öffnung wird an ihren beiden Enden mit Verschlußdeckeln abgedeckt, die abgestufte, umlaufende Ränder aufweisen.

Aufgabe der Erfindung ist es daher, einen Induktivgeber nach dem Oberbegriff des Anspruchs 1 zu schaffen, der bei einfacher Herstellbarkeit wasserdicht ist.

Diese Aufgabe wird erfindungsgemäß dadurch gelöst, daß die Öffnung des Gehäuses durchgehend ist, daß der Spulenträger, der topfförmig ausgebildet ist, an seinem Öffnungsseitigen Ende einen die Mündung der Öffnung des Gehäuses dicht verschließenden Flansch aufweist und in seiner topfförmigen Ausnehmung den Dauermagnet und die mit ihren einen Enden aus der Ausnehmung am öffnungsseitigen Ende herausragenden Polschuhe aufnimmt, und daß zwei am Gehäuse fest angeordnete, mit dem Kabel verbundene Ausgangsanschlußkontakte, die je zu einem Ausgangsanschlußstück ragen und mit diesem leitend verbunden sind, sowie ein die zweite Mündung der Öffnung des Gehäuses dicht erschließender Deckel vorgesehen sind.

Dabei erfüllt der Spulenträger eine Vielfachfunktion, indem er zum einen als Trägerteil für die aus den Ausgangsanschlußstücken, den Polschuhen, dem Dauermagnet und der Spule gebildeten Baugruppe dient, die im zusammengebauten Zustand in das Gehäuse einschiebbar ist. Zum anderen sind die Polschuhe und der Magnet in der nach außen offenen topfförmigen Ausnehmung angeordnet, so daß keine zum Gehäuseinneren führende Ausnehmung für die Polschuhe erforderlich ist. Dabei sind Dichtungsprobleme vermieden. Desweiteren bildet der Flansch des Spulenträgers gleichzeitig den Verschluß für die eine Öffnung des Gehäuses.

Da nach dem Einsetzen des Spulenträgers in das Gehäuse durch dessen andere Öffnung die Ausgangsanschlußstücke und Ausgangsanschlußkontakte leicht zugänglich und miteinander leitend verbindbar sind und nun nur noch diese Öffnung mit dem Deckel verschlossen werden muß, erfolgt die Montage mit wenigen einfachen Vorgängen. Diese erlauben auch gut eine Maschinenmontage des Induktivgebers. Eine leichte Herstellbarkeit wird weiterhin dadurch erreicht, daß Gehäuse und/oder Spulenträger und/oder Deckel Spritzgußteile sind, wobei es günstig ist, wenn Deckel und Flansch sowie die Mündungen der Öffnung des Gehäuses rotationssymmetrisch ausgebildet sind.

Eine genaue Positionierung beim Einsetzen des Spulenträgers in das Gehäuse wird dadurch erreicht, daß Deckel und/oder Flansch in stufenartige, umlaufende Ausnehmungen an den Mündungen der Öffnung des Gehäuses eingesetzt sind. Zusätzlich können noch an Gehäuse und Spulenträger ineinandergreifende Axial, führungen angeordnet sein, die eine einwandfreie Lage der radialen Zuordnung sicherstellen.

Eine hohe Sicherheit gegen Eindringen von Wasser in das Gehäuse wird dadurch erreicht, daß Deckel und/ oder Flansch mit dem Gehäuse verschweint sind, wobei es besonders vorteilhaft ist, wenn Deckel und/oder Flansch mit dem Gehäuse ultraschallverschweißt sind.

Um die Polschuhe in ihrer Lage zu sichern, können Polschuhe und Magnet miteinander verklebt sein. Spezielle Montagevorgänge und Befestigungsvorrichtungen für die Ausgangsanschlußstücke werden dadurch nicht benötigt, daß die Ausgangsanschlußstücke in den Spulenträger eingegossen sind, wobei jeweils ein Ende eines Ausgangsanschlußstücks zur Spule und das andere Ende an der Bodenseite des Spulenträgers herausragt.

Sind die spulenseitigen Enden der Ausgangsanschlußstücke aus dem Bereich der Spule heraus radial nach außen ragend abbiegbar, so ist bei radial nach aussen gerichteten Enden der Bereich der Spule völlig frei. Dies ermöglicht es ungehindert die Spule aufzuwickeln. Anschließend werden die Enden der Ausgangsanschlußstücke in den Bereich der Spule gebogen und dort z.B. durch Löten jeweils mit einem Ende der Spule leitend verbunden.

Auch bei den Ausgangsanschlußkontakten kann auf spezielle Montagevorgänge und Befestigungsvorrichtungen verzichtet werden, wenn die Ausgangsanschlußkontakte und das daran angeschlossene Kabelende in das Gehäuse eingegossen sind. Dabei sind die Ausgangsanschlußkontakte vorzugsweise starr ausgebildet, so daß beim Einsetzen des Spulenträgers die Ausgangsanschlußstücke und Ausgangsanschlußkontakte von selbst lagegenau einander zugeführt werden. Sie brauchen nur noch elektrisch leitend miteinander verbunden werden. Dieser Vorgang ist besonders einfach durchführbar, wenn die Ausgangsanschlußkontakte etwa radial in die Öffnung des Gehäuses hineinragen und Ausnehmungen aufweisen, die in die Ausgangsanschlußstücke hineinragen.

Eine einfache Möglichkeit zum leitenden Verbinden miteinander besteht darin daß die Ausgangsanschlußkontakte und Ausgangsanschlußstücke miteinander verlötet sind. Zur Halterung des Kabels am Gehäuse kann das in das Gehäuse eingegossene Kabelende von einer Tülle umschlossen sein.

Um zu verhindern, daß Nässe zwischen Kabelummantelung und Tülle in den Gehäuseinnenraum einziehen kann, kann das Kabel eine Kunststoffummantelung besitzen, auf der die aus Kunststoff bestehende Tülle durch Vernetzung dicht angeordnet ist.

Ist die Tülle an ihrer äußeren Mantelfläche mit nebeneinander angeordneten, umlaufenden Ansätzen ausgebildet, so bilden die Ansätze sowohl eine Zugsicherung als auch eine Labyrinthdichtung.

Besitzen die Ansätze einen Dreiecksquerschnitt, so ergeben sich an deren Spitzen besonders hohe Anpreßdrücke durch den Gehäusewerkstoff, so daß die Dichtwirkung noch erhöht wird.

Besteht die Tülle aus einem elastischen Kunststoff, kann durch das Schrumpfen des Gehäusewerkstoffs nach dem Spritzgießen die Verbindung zur Tülle eine besonders hohe Dichtheit erreichen.

Ein Ausführungsbeispiel der Erfindung ist in der Zeichnung dargestellt und wird im folgenden näher beschrieben.

Es zeigen

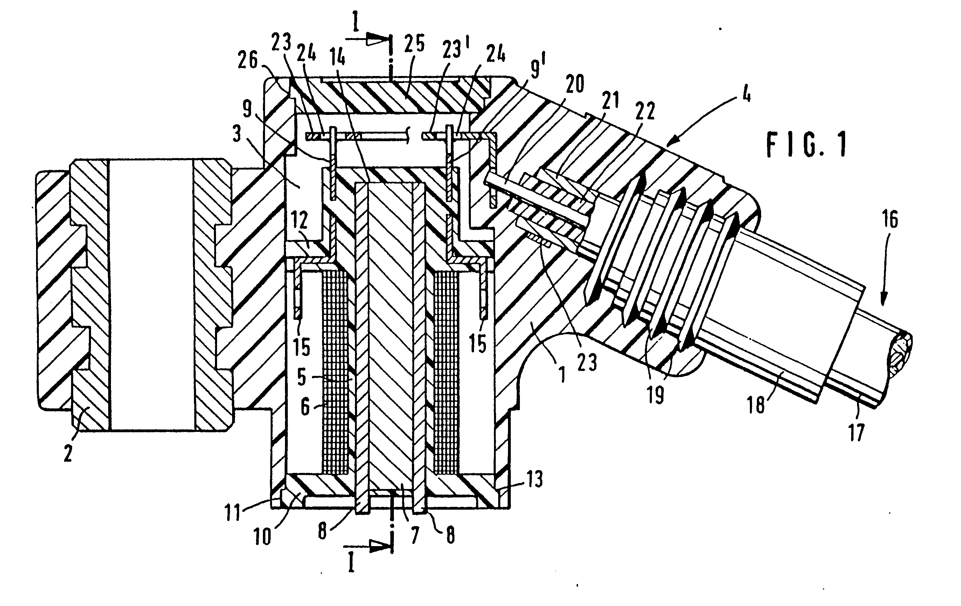

Figur 1 einen Querschnitt durch einen Induktivgeber

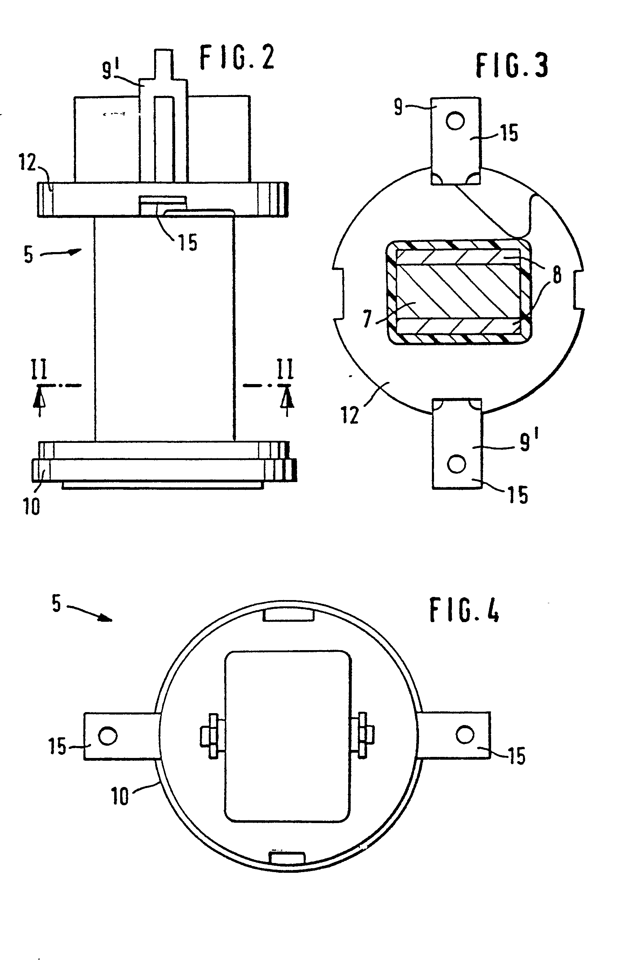

Figur 2 eine Seitenansicht des Spulenträgers des Induktivgebers nach Figur

Figur 3 einen Querschnitt entlang der Linie II-II in Figur 2

Figur 4 eine Draufsicht auf den Spulenträger nach Figur 2

Figur 5 eine Ansicht von unten des Spulenträgers nach Figur 2

Figur 6 einen Querschnitt des Spulenträgers nach Figur 2

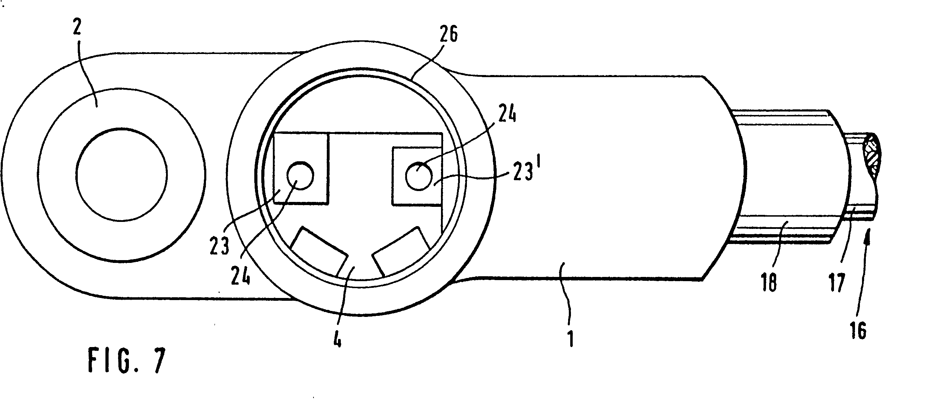

Figur 7 eine Draufsicht auf den Induktivgeber nach Figur 1

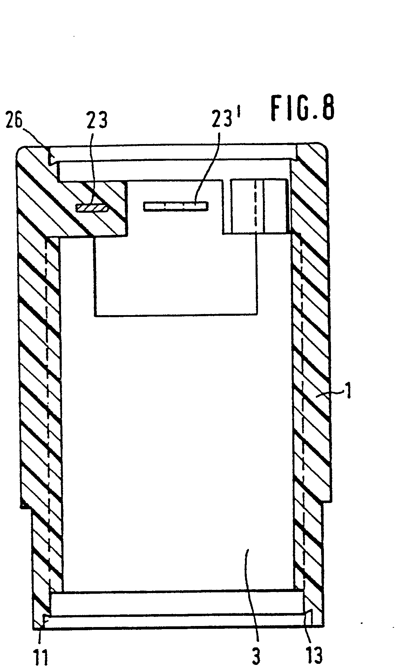

Figur 8 eine Querschnittansicht des Gehäuses des Induktivgebers nach Figur 1 entlang der Linie I-I

Der dargestellte Induktivgeber besitzt ein Gehäuse 1 mit einer Befestigungsbuchse 2, einer durchgehenden Öffnung 3 und einem Kabelanschluß 4.

In die rotationssymmetrische Öffnung 3 ist eine Baugruppe eingesetzt, die aus einem Spulenträger 5, einer Spule 6 einem Dauermagnet 7, zwei Polschuhen 8 und zwei Ausgangsanschlußstücken 9 und 9' besteht. Dabei bildet der Spulenträger 5 gleichzeitig das Trägerteil für die weiteren Bauteile dieser Baugruppe. Weiterhin weist der Spulenträger 5 einen Flansch 10 auf, durch den die untere Mündung der Öffnung 3 verschlossen ist.

Sowohl durch den in eine an dieser Mündung eingreifende, stufenartige, umlaufende Ausnehmung 11 eingesetzten Flansch 10, der den Spulenbereich axial auch auf einer Seite begrenzt, als auch durch ein weiteres, den Spulenbereich axial auf der anderen Seite begrenzendes Flanschteil 12 des Spulenträgers 5, ist dieser zentrisch in der Öffnung 3 geführt. In axialer Richtung ist der Spulenträger 5 durch axiale Anlage des Flansches 10 am Boden 13 der Ausnehmung 11 in seiner korrekten Einbaulage fixiert.

Der Spulenträger 5 weist eine topfförmige Ausnehmung 14 auf, die keine Verbindung zum Gehäuseinnenraum hat und in der der Dauermagnet 7 und die beiden Polschuhe 8 angeordnet sind.

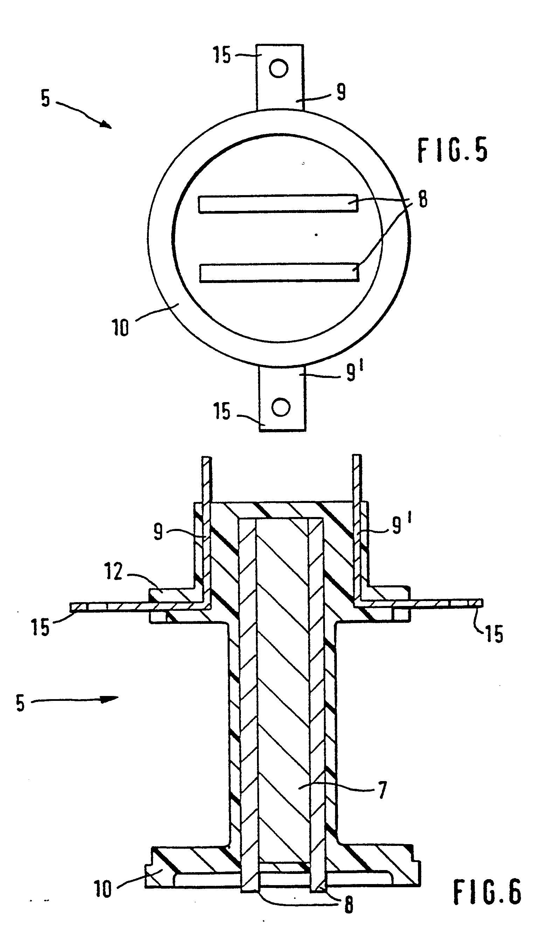

Der Spulenträger 5 ist ein aus Kunststoff bestehendes Spritzgußteil. Zum Spritzgießvorgang werden die Ausgangsanschlußstücke 9 und 9' als Winkelteile mit je einem axial gerichteten und einem radial nach außen gerichteten Ende (Figur 6) Sowie die vorher mit dem Dauermagnet 7 zusammengeklebten Polschuhe 8 in eine Form eingesetzt und umgossen. Dadurch wird die Ausnehmung 14 bis auf die nach außen führenden Enden der Polschuhe 8 verschlossen, so daß Polschuhe 8 und Dauermagnet 7 festgehalten sind.

Die aus dem Inneren der Form durch Ausnehmungen herausragenden Enden der Ausgangsanschlußstücke 9 und 9' bleiben ebenfalls frei. Da die spulenseitigen Enden 15 der Ausgangsanschlußstücke 9 und 9' radial nach außen wegragen, kann ungehindert die Spule 6 gewickelt werden. Anschließend werden die Enden 15 zur Spule 6 hin umgebogen und durch Löten mit den Spulenenden verbunden. Der Kabelanschluß 4 besteht aus einem Kabel 16 mit einer Kunststoffummantelung 17 auf der durch Vernetzung eine Tülle 18 dicht angeordnet ist. Vorzugsweise bestehen Kunststoffummantelung 17 und Tülle 18 aus Polyurethan.

Die Tülle 18 besitzt an ihrem vom Gehäuse 1 umschlossenen Bereich umlaufende Ansätze 19 mit Dreiecksquerschnitt. Diese führen nach dem Umgießen zu einer zugfesten und hochdichten Verbindung mit dem Gehäuse 1.

Das Koaxialkabel 16 besitzt einen Innenleiter 20 und einen diesen umschließenden Leiter 21 ringförmigen Querschnitts, wobei zwischen diesen beiden Leitern eine Isolierschicht 22 angeordnet ist.

Vor dem Vergießen wird durch Löten der Innenleiter 20 mit einem starren Ausgangsanschlußkontakt 23' und der Leiter 21 mit einem Ausgangsanschlußkontakt 23 verbunden.

Diese Baugruppe wird lagegenau in eine Gießform des Gehäuses 1 eingelegt und im Spritzgußverfahren mit Kunststoff umgossen.

Die freien Enden der Ausgangsanschlußkontakte 23 und 23' ragen dabei radial in die Öffnung 3 des Gehäuses 1. Diese freien Enden besitzen Bohrungen 24, in die beim Einsetzen des Spulenträgers 5 die freien Enden der Ausgangsanschlußstücke 9 und 9' hineinragen und nur noch verlötet werden brauchen. Nach dem Lötvorgang wird ein Deckel 25 aus Kunststoff in die mit einer umlaufenden, stufenartigen Ausnehmung 26 versehene obere Mündung der Öffnung 3 eingesetzt und durch Ultraschallschweissen dicht mit dem Gehäuse 1 verbunden. Desgleichen ist der Flansch 11 durch Ultraschallschweißen dicht mit dem Gehäuse 1 verbunden, so daß der Gehäuseinnenraum und die darin angeordneten elektrischen Bauteile sicher vor dem Eindringen von Feuchtigkeit geschützt sind.

**Patentansprüche**

1. Induktivgeber mit einem eine Öffnung (3) aufweisenden Gehäuse (1) in der zwei Polschuhe (8), ein zwischen den Polschuhen (8) angeordneter Dauermagnet (7) und eine den Dauermagnet (7) und die Polschuhe (8) umschließende Spule (6) angeordnet sind, wobei die Spule (6) einen in die Öffnung (3) des Gehäuses (1) einsetzbaren Spulenträger (5) umschließt, an dessen einem Ende hervorstehend zwei jeweils mit einem Ende der Spule (6) verbundene Ausgangsanschlußstücke (9, 9') fest angeordnet sind, die mit einem aus dem Gehäuse (1) nach außen geführten (16) Kabel verbunden sind, dadurch gekennzeichnet, daß die Öffnung (3) des Gehäuses (1) durchgehend ist, daß der Spulenträger (5), der topfförmig ausgebildet ist, an seinem öffnungsseitigen Ende einen die Mündung der Öffnung (3) des Gehäuses (1) dicht verschließenden Flansch (10) aufweist und in seiner topfförmigen Ausnehmung (14) den Dauermagnet (7) und die mit ihren einen Enden aus der Ausnehmung (14) am öffnungsseitigen Ende herausragenden Polschuhe (8) aufnimmt, und daß zwei am Gehäuse (1) fest angeordnete mit dem Kabel (16) verbundene Ausgangsanschlußkontakter (23, 23'), die je zu einem Ausgangsanschlußstück (9, 9') ragen und mit diesem leitend verbunden sind, sowie ein die zweite Mündung der Öffnung (3) des Gehäuses (1) dicht verschließender Deckel (25) vorgesehen sind.

2. Induktivgeber nach Anspruch 1, dadurch gekennzeichnet, daß Gehäuse (1) und/oder Spulenträger (5) und/oder Deckel (25) Spritzgußteile sind/ist.

3. Induktivgeber nach einem der vorhergehenden Ansprüche, dadurch gekennzeichnet, daß Deckel (25) und Flansch (10) sowie die Mündungen der Öffnung (3) des Gehäuses (1) rotationssymmetrisch ausgebildet sind.

4. Induktivgeber nach einem der vorhergehenden Ansprüche, dadurch gekennzeichnet, daß Deckel (25) und/oder Flansch (10) in stufenartige, umlaufende Ausnehmungen (11, 26) an den Mündungen der Öffnung (3) des Gehäuses (1) eingesetzt sind/ist.

5. Induktivgeber nach einem der vorhergehenden Ansprüche, dadurch gekennzeichnet, daß Deckel (25) und/oder Flansch (10) mit dem Gehäuse (1) verschweißt sind/ist.

6. Induktivgeber nach Anspruch 5, dadurch gekennzeichnet, daß Deckel (25) und/oder Flansch (10) mit dem Gehäuse (1) ultraschallverschweißt sind/ist.

7. Induktivgeber nach einem der vorhergehenden Ansprüche, dadurch gekennzeichnet, daß Polschuhe (8) und Dauermagnet (7) miteinander verklebt sind.

8. Induktivgeber nach Anspruch 2, dadurch gekennzeichnet, daß die Ausgangsanschlußstücke (9, 9') in den Spulenträger (5) eingegossen sind, wobei jeweils ein Ende (15) eines Ausgangsanschlußstücks (9, 9') zur Spule (6) hin und das andere Ende an der der Spule (6) abgewandten Seite aus dem Spulenträger (5) herausragt.

9. Induktivgeber nach Anspruch 8, dadurch gekennzeichnet, daß die spulenseitigen Enden (15) der Ausgangsanschlußstücke (9, 9') aus dem Bereich der Spule (6) heraus radial nach außen ragend abbiegbar sind.

10. Induktivgeber nach Anspruch 2, dadurch gekennzeichnet, daß die Ausgangsanschlußkontakte (23, 23') und das daran angeschlossene Kabelende in das Gehäuse (1) eingegossen sind.

11. Induktivgeber nach Anspruch 10, dadurch gekennzeichnet, daß die Ausgangsanschlußkontakte (23, 23') starr ausgebildet sind.

12. Induktivgeber nach Anspruch 10, dadurch gekennzeichnet, daß die Ausgangsanschlußkontakte (23, 23') etwa radial in die Öffnung (3) des Gehäuses (1) hineinragen und Ausnehmungen (24) aufweisen, in die die Ausgangsanschlußstücke (9, 9') hineinragen.

13. Induktivgeber nach einem der vorhergehenden Ansprüche, dadurch gekennzeichnet, daß Ausgangsanschlußkontakte

(23, 23') und Ausgangsanschlußstücke (9, 9') miteinander verlötet sind.

14. Induktivgeber nach Anspruch 10, dadurch gekennzeichnet, daß das in das Gehäuse (1) eingegossene Kabelende von einer Tülle (18) umschlossen ist.

15. Induktivgeber nach Anspruch 14, dadurch gekennzeichnet, daß das Kabel (16) eine Kunststoffummantelung (17) besitzt, auf der die aus Kunststoff bestehende Tülle (18) durch Vernetzung dicht angeordnet ist.

16. Induktivgeber nach Anspruch 14, dadurch gekennzeichnet, daß die Tülle (18) an ihrer äußeren Mantelfläche mit nebeneinander angeordneten, umlaufenden Ansätzen (19) ausgebildet ist.

17. Induktivgeber nach Anspruch 16, dadurch gekennzeichnet, daß die Ansätze (19) einen Dreiecksquerschnitt besitzen.

18. Induktivgeber nach Anspruch 14, dadurch gekennzeichnet, daß die Tülle (18) aus einem elastischen Kunststoff besteht.

**Claims**

1. Inductive transmitter with a housing (1) having an opening (3) wherein two pole pieces (8), a permanent magnet (7) arranged between the pole pieces (8), and a coil (6) surrounding the permanent magnet (7) and the pole pieces (8) are arranged, the coil (6) surrounding a coil support (5) which is insertable in the opening (3) of the housing (1) and on one end of which two projecting output connection elements (9, 9') each connected to one end of the coil (6) are fixedly arranged, these elements being connected to a cable (16) taken outwardly from the housing (1), characterised in that the opening (3) of the housing (1) is a through aperture, that the coil support (5), which is of pot-shaped construction, has at its end adjacent its opening a flange (10) closing the mouth of the opening (3) of the housing (1) in sealing-tight manner and accommodates in its pot-shaped recess (14) the permanent magnet (7) and the pole pieces (8) situated to project at one of their ends from the recess (14) at the open end, and that there are provided two output connection contacts (23, 23') which are arranged securely on the housing (1) and are connected with the cable (16) and which each extend to an output connection element (9, 9') and are connected conductively thereto, and also a cover (25) which in sealing-tight manner closes the second mouth of the opening (3) of the housing (1).

2. Inductive transmitter according to claim 1, characterised in that the housing (1) and/or the coil support (5) and/or the cover (25) are/is produced by injection moulding.

3. Inductive transmitter according to one of the preceding claims, characterised in that the cover (25) and the flange (10) and also the mouths of the opening (3) of the housing (1) are of rotationally symmetrical construction.

4. Inductive transmitter according to one of the preceding claims, characterised in that the cover (25) and/or the flange (10) are/is inserted in step-shaped encircling recesses (11, 26) at the mouths of the opening (3) of the housing (1).

5. Inductive transmitter according to one of the preceding claims, characterised in that the cover (25) and/or flange (10) are/is welded to the housing (1).

6. Inductive transmitter according to claim 5, characterised in that the cover (25) and/or the flange (10) are joined by ultrasonic welding to the housing (1).

7. Inductive transmitter according to one of the preceding claims, characterised in that the pole pieces (8) and the permanent magnet (7) are adhesively secured to one another.

8. Inductive transmitter according to claim 2, characterised in that the output connection elements (9, 9') are moulded into the coil support (5), in each case one end (15) of an output connection element (9, 9') projecting towards the coil (6) and the other end projecting from the coil support (5) at the side remote from the coil (6).

9. Inductive transmitter according to claim 8, characterised in that the coil-region ends (15) of the output connection elements (9, 9') are adapted to be bent over to project radially outwardly from the region of the coil (6).

10. Inductive transmitter according to claim 2, characterised in that the output connection contacts (23, 23') and the cable end connected thereto are injection moulded into the housing (1).

11. Inductive transmitter according to claim 10, characterised in that the output connection contacts (23, 23') are of rigid construction.

12. Inductive transmitter according to claim 10, characterised in that the output connection contacts (23, 23') project approximately radially into the opening (3) of the housing (1), and have holes (24) into which the output connection elements (9, 9') project.

13. Inductive transmitter according to one of the preceding claims, characterised in that output connection contacts (23, 23') and output connection elements (9, 9') are joined to one another by soldering.

14. Inductive transmitter according to claim 10, characterised in that the cable end moulded into the housing (1) is surrounded by a sleeve (18).

15. Inductive transmitter according to claim 14, characterised in that the cable (16) has a sheath (17) of synthetic plastic material on which there is arranged in sealing-tight manner by means of cross-linking the sleeve (18) which is made of synthetic plastic material.

16. Inductive transmitter according to claim 14, characterised in that the sleeve (18) is formed at its outer peripheral surface with encircling projections (19) which are situated adjacent one another.

17. Inductive transmitter according to claim 16, characterised in that the projections (19) are of a triangular cross-section.

18. Inductive transmitter according to claim 14, characterised in that the sleeve (18) consists of an elastic synthetic plastic material.

## Revendications

1. Capteur inductif comportant un boîtier (1) présentant une cavité (3) dans laquelle sont disposés deux pôles (8), un aimant permanent (7) placé entre les pôles (8) et une bobine (6) entourant l'aimant permanent (7) et les pôles (8), la bobine (6) renfermant un porte-bobine (5) insérable dans la cavité (3) du boîtier (1) et présentant en saillie à l'une de ses extrémités deux éléments (9, 9') de raccordement de sortie reliés à une extrémité de la bobine (6) et reliés à un câble (16) guidé vers l'extérieur du boîtier (1), capteur caractérisé en ce que la cavité (3) du boîtier (1) est continue, en ce que le porte-bobine, (5), qui est en forme de pot, présente à son extrémité du côté ouvert un rebord (10) obturant de manière étanche l'embouchure de la cavité (3) du boîtier (1) et loge, dans son creux (14) en forme de pot, l'aimant permanent (7) et les pôles (8) dont une extrémité fait saillie à l'extrémité, côté ouvert, du creux (14), et en ce qu'on prévoit deux contacts (23, 23') de raccordement de sortie, assujettis au boîtier (1), reliés au câble (16), qui font saillie chacun vers un élément (9, 9') de raccordement de sortie et comportent avec lui une liaison conductrice, ainsi qu'un couvercle (25) obturant de manière étanche la seconde embouchure de la cavité (3) du boîtier (1).

2. Capteur inductif selon la revendication 1, caractérisé en ce que le boîtier (1) et/ou le porte-bobine (5) et/ou le couvercle (25) est ou sont une ou des pièce(s) moulée(s) par injection.

3. Capteur inductif selon l'une des revendications précédentes, caractérisé en ce que le couvercle (25) et le rebord (10) ainsi que les embouchures de la cavité (3) du boîtier (1) ont une symétrie de rotation.

4. Capteur inductif selon l'une des revendications précédentes, caractérisé en ce que le couvercle (25) et/ou le rebord (10) est ou sont inséré(s) dans des creux (11, 26) circulaires étagés des embouchures de la cavité (3) du boîtier (1).

5. Capteur inductif selon l'une des revendications précédentes, caractérisé en ce que le couvercle (25) et/ou le rebord (10) est ou sont soudé(s) au boîtier (1).

6. Capteur inductif selon la revendication 5, caractérisé en ce que le couvercle (25) et/ou le rebord (10) est ou sont soudé(s) par ultrasons au boîtier (1).

7. Capteur inductif selon l'une des revendications précédentes, caractérisé en ce que les pôles (8) et l'aimant permanent (7) sont collés l'un à l'autre.

8. Capteur inductif selon la revendication 2, caractérisé en ce que les éléments (9, 9') de raccordement de sortie sont coulés dans le porte-bobine (5), une extrémité de chaque élément (9, 9') faisant saillie du porte-bobine (5) du côté de la bobine (6) et l'autre extrémité faisant saillie de ce porte-bobine (5) du côté éloigné de la bobine (6).

9. Capteur inductif selon la revendication 8, caractérisé en ce que les extrémités (15), côté bobine, des éléments (9) de raccordement de sortie peuvent être repliées en étant radialement en saillie vers l'extérieur de la zone de la bobine (6).

10. Capteur inductif selon la revendication 2, caractérisé en ce que les contacts (23, 23') de raccordement de sortie et les extrémités de câble qui y sont assujetties sont coulés dans le boîtier (1).

11. Capteur inductif selon la revendication 10, caractérisé en ce que les contacts (23, 23') de raccordement de sortie sont réalisés rigides.

12. Capteur inductif selon la revendication 10, caractérisé en ce que les contacts (23, 23') de raccordement de sortie pénètrent, de façon approximativement radiale, dans la cavité (3) du boîtier (1) et présentent des évidements (24) dans lesquels pénètrent les éléments (9, 9') de raccordement de sortie.

13. Capteur inductif selon l'une des revendications précédentes, caractérisé en ce que les contacts (23, 23') de raccordement de sortie et les éléments (9, 9') de raccordement de sortie sont brasés ou soudés les un aux autres.

14. Capteur inductif selon la revendication 10, caractérisé en ce que l'extrémité de câble coulée dans le boîtier (1) est entourée d'un passe-câble (18).

15. Capteur inductif selon la revendication 14, caractérisé en ce que le câble (16) comporte un gainage (17) en matière plastique, sur lequel est disposé, de manière étanche par réticulation, le passe-câble (18) en matière plastique.

16. Capteur inductif selon la revendication 14, caractérisé en ce que le passe-câble (18) comporte à sa surface d'enveloppe externe des épaulements (19) entourant cette surface et disposés l'un à côté de l'autre.

17. Capteur inductif selon la revendication 16, caractérisé en ce que les épaulements (19) ont en coupe une forme triangulaire.

18. Capteur inductif selon la revendication 14, caractérisé en ce que le passe-câble (18) consiste en une matière plastique élastique.

FIG. 1

FIG. 2

9'

12

5

II    II

10

FIG. 3

9

15

8

7

12

9'

15

5

FIG. 4

15    15

15    15

10

FIG.5

FIG.6

FIG. 7

0 149 217

FIG.8